(19) Europäisches Patentamt
European Patent Office
Office européen des brevets

(11) **EP 3 944 128 A1**

(12) **EUROPEAN PATENT APPLICATION**

(43) Date of publication:
**26.01.2022 Bulletin 2022/04**

(21) Application number: **21164450.5**

(22) Date of filing: **24.03.2021**

(51) International Patent Classification (IPC):
**G06F 40/30** (2020.01)     **G06N 3/08** (2006.01)

(52) Cooperative Patent Classification (CPC):
**G06F 40/30; G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.07.2020 CN 202010699284**

(71) Applicant: **Beijing Baidu Netcom Science and Technology Co., Ltd. Beijing 100085 (CN)**

(72) Inventors:
• **OUYANG, Xuan**
  **Beijing, Beijing 100085 (CN)**
• **WANG, Shuohuan**
  **Beijing, Beijing 100085 (CN)**
• **SUN, Yu**
  **Beijing, Beijing 100085 (CN)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(54) **METHOD AND APPARATUS FOR TRAINING NATURAL LANGUAGE PROCESSING MODEL, DEVICE AND STORAGE MEDIUM**

(57) The present application discloses a method and apparatus for training a natural language processing model, a device and a storage medium, which relates to the natural language processing field based on artificial intelligence. An implementation includes: constructing training language material pairs of a coreference resolution task based on a preset language material set, wherein each training language material pair includes a positive sample and a negative sample; training the natural language processing model with the training language material pair to enable the natural language processing model to learn the capability of recognizing corresponding positive samples and negative samples; and training the natural language processing model with the positive samples of the training language material pairs to enable the natural language processing model to learn the capability of the coreference resolution task.

Fig.1

**Description**

**Field of the Disclosure**

The present application relates to the technical field of computers, and particularly relates to the natural language processing field based on artificial intelligence, and particularly to a method and apparatus for training a natural language processing model, a device, a storage medium and a computer program product.

**Background of the Disclosure**

In Natural Language Processing (NLP) tasks, there exists a great need for coreference resolution tasks.

For example, in reading comprehension, an article may be accurately and comprehensively understood by knowing a noun to which each pronoun refers; in machine translation, pronouns he and she are not distinguished in Turkish, and if meanings of the pronouns are unable to be parsed accurately in translation into English, a machine translation effect is affected seriously. How to better model the coreference resolution task and improve the capacity of a natural language processing model to process the coreference resolution task is a technical problem required to be solved urgently.

**Summary of the Disclosure**

In order to solve the above-mentioned problem, the present application provides a method and apparatus for training a natural language processing model, a device, a storage medium and a computer program product.

According to an aspect of the present application, there is provided a method for training a natural language processing model, including:

constructing training language material pairs of a coreference resolution task based on a preset language material set, wherein each training language material pair includes a positive sample and a negative sample;
training the natural language processing model with the training language material pairs to enable the natural language processing model to learn the capability of recognizing corresponding positive samples and negative samples; and
training the natural language processing model with the positive samples of the training language material pairs to enable the natural language processing model to learn the capability of the coreference resolution task.

According to another aspect of the present application, there is provided an apparatus for training a natural language processing model, including:

a constructing module configured to construct training language material pairs of a coreference resolution task based on a preset language material set, wherein each training language material pair includes a positive sample and a negative sample;
a first training module configured to train the natural language processing model with the training language material pairs to enable the natural language processing model to learn the capability of recognizing corresponding positive samples and negative samples; and
a second training module configured to train the natural language processing model with the positive sample of the training language material pairs to enable the natural language processing model to learn the capability of the coreference resolution task.

According to still another aspect of the present application, there is provided an electronic device, including:

at least one processor;
a memory connected with the at least one processor communicatively;
wherein the memory stores instructions executable by the at least one processor to enable the at least one processor to perform the method as mentioned above.

According to yet another aspect of the present application, there is provided a non-transitory computer readable storage medium with computer instructions stored thereon, wherein the computer instructions are used for causing a computer to perform the method as mentioned above.

According to yet another aspect of the present application, there is provided a computer program product, comprising instructions which, when the program is executed by a computer, cause the computer to perform the method as mentioned above.

The technology of the present application may model the coreference resolution task by the natural language processing model, improve the capacity of the natural language processing model to process the coreference resolution task, enrich functions of the natural language processing model, and enhance practicability of the natural language processing model.

It should be understood that the statements in this section are not intended to identify key or critical features of the embodiments of the present disclosure, nor limit the scope of the present disclosure. Other features of the present disclosure will become apparent from the following description.

**Brief Description of Drawings**

The drawings are used for better understanding the present solution and do not constitute a limitation of the present application. In the drawings:

Fig. 1 is a schematic diagram according to a first embodiment of the present application;
Fig. 2 is a schematic diagram according to a second embodiment of the present application;
Fig. 3 is a diagram of an example of a constructed training language material pair according to the present embodiment;
Fig. 4 is a schematic diagram of a pre-training process of a natural language processing model according to the present embodiment;
Fig. 5 is a schematic diagram according to a third embodiment of the present application;
Fig. 6 is a schematic diagram according to a fourth embodiment of the present application; and
Fig. 7 is a block diagram of an electronic device configured to implement the above-mentioned method according to the embodiment of the present application.

**Detailed Description of Preferred Embodiments**

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and structures are omitted in the descriptions below.

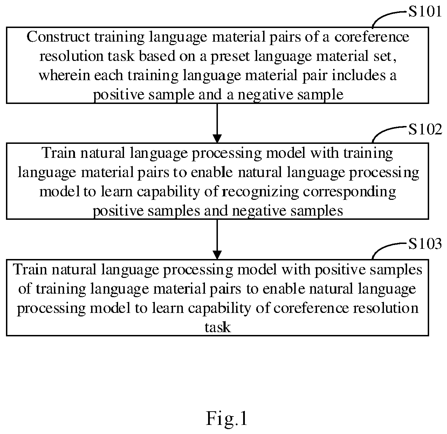

Fig. 1 is a schematic diagram according to a first embodiment of the present application; as shown in Fig. 1, this embodiment provides a method for training a natural language processing model, which may include the following steps:

S101: Constructing h training language material pairs of a coreference resolution task based on a preset language material set, wherein each training language material pair includes a positive sample and a negative sample;
S102: Training the natural language processing model with the training language material pairs to enable the natural language processing model to learn the capability of recognizing corresponding positive samples and negative samples; and
S103: Training the natural language processing model with the positive samples of the training language material pairs to enable the natural language processing model to learn the capability of the coreference resolution task.

An apparatus for training a natural language processing model serves as a subject for executing the method for training a natural language processing model according to the present embodiment, and may be configured as an entity electronic device, such as a computer, or as an application integrated with software, which is run on the computer in use, so as to train the natural language processing model.

The present embodiment has an aim of training the natural language processing model to perform the coreference resolution task. The coreference resolution task specifically refers to, when a pronoun and at least two different nouns exist in a sentence, how to identify the noun to which the pronoun specifically refers in the sentence. The natural language processing model in the present embodiment may be trained based on an Enhanced Language Representation with Informative Entity (ERNIE) model.

In the present embodiment, the preset language material set is a set collected in advance and including countless language materials. The language of the language material set may be a language scenario to which the natural language processing model to be trained for performing the coreference resolution task is applied. The natural language processing model corresponding to each of English, Chinese, Japanese, Turkish, or the like may be trained to execute the corresponding coreference resolution task.

In the present embodiment, one training language material pair of the coreference resolution task may be constructed based on each language material in the preset language material set. Each training language material pair in the present embodiment may include the positive and negative examples. The positive example includes a correct reference relationship and the negative example includes a wrong reference. For example, each training language material pair may include one positive sample and one negative sample, or one positive sample and at least two negative samples, and specifically, the number of the negative samples is determined based on the number of the nouns in the corresponding language material. Or, when each training language material pair only includes one positive sample and one negative sample, plural training language material pairs may also be generated based on one language material in the language material set. For example, if a certain language material S includes three nouns a, b, and c and a pronoun "it", and the pronoun "it" is known to refer to the noun c, two training language material pairs may be formed. In the first training language material pair, the pronoun "it" refers to c in the positive sample S and refers to a in the negative sample S; in the second training language material pair, the pronoun "it" refers to c in the positive sample S and refers to b in the negative sample S. In the above manner, based on the language material set, countless training language material pairs of coreference resolution tasks may be constructed.

In the present embodiment, the training process of the natural language processing model is divided into two stages, and in the first stage, the natural language processing model is trained with each training language material pair to learn the capability of identifying the corresponding positive and negative samples; with this stage of the training process, the natural language processing model learns to identify the positive sample and the negative sample, so as to know correct and wrong reference relationships. In this stage, the natural language processing model may be trained with a large number of training language material pairs to get the recognition capability.

Based on the learning process in the first stage, the natural language processing model is adjusted to recognize the correct and wrong reference relationships. In the second stage of the training process, learning difficulty is increased progressively, the natural language processing model is trained with the positive sample of each training language material pair to learn the capacity of the coreference resolution task; that is, the language processing model may learn to identify the noun in the sentence to which the pronoun in the sentence refers to, so as to achieve the capacity of executing the coreference resolution task. With this process, on the basis of the learning process of the first stage, parameters of the natural language processing model may be tuned finely to realize a learning process with tasks and purposes, such that the natural language processing model masters the capability of executing the coreference resolution task. In the learning process of the first stage in the present embodiment, the parameters of the natural language processing model may be preliminarily adjusted in a pre-training stage based on the ERNIE model. In the learning process of the second stage, the parameters of the natural language processing model obtained by the first stage of the training process may be finally tuned in the fine-tuning stage with the positive sample of each training language material pair, such that the model learns the capability of the coreference resolution task.

The natural language processing model trained in the present embodiment may be used in any scenario with the coreference resolution task, for example, in reading comprehension, the correct reference relationship of each pronoun in the sentence may be understood to assist in understanding a full text thoroughly.

The method for training a natural language processing model according to the present embodiment includes: constructing each training language material pair of the coreference resolution task based on the preset language material set, wherein each training language material pair includes the positive sample and the negative sample; training the natural language processing model with each training language material pair to enable the natural language processing model to learn the capability of recognizing the corresponding positive sample and negative sample; and training the natural language processing model with the positive sample of each training language material pair to enable the natural language processing model to learn the capability of the coreference resolution task, so as to model the coreference resolution task by the natural language processing model, improve the capacity of the natural language processing model to process the coreference resolution task, enrich functions of the natural language processing model, and enhance practicability of the natural language processing model.

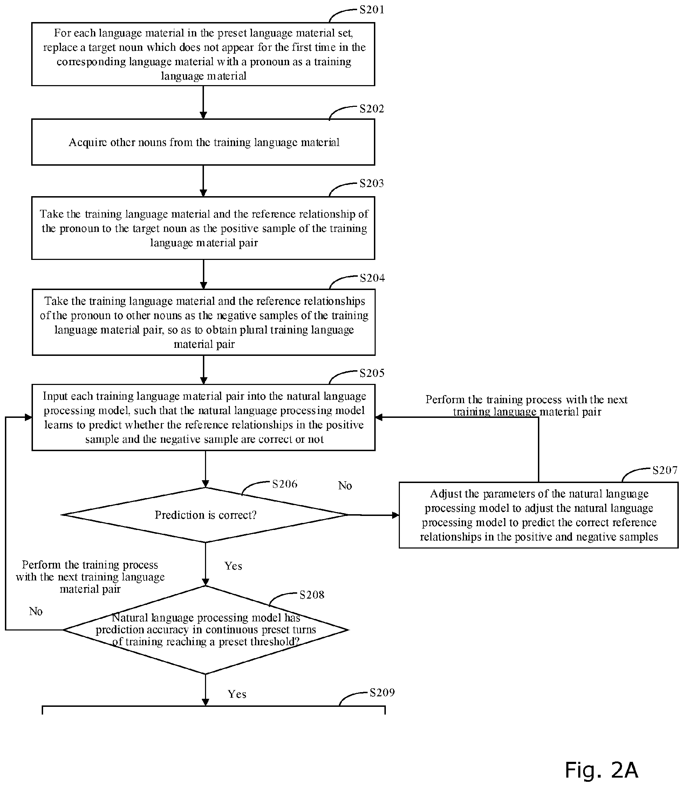

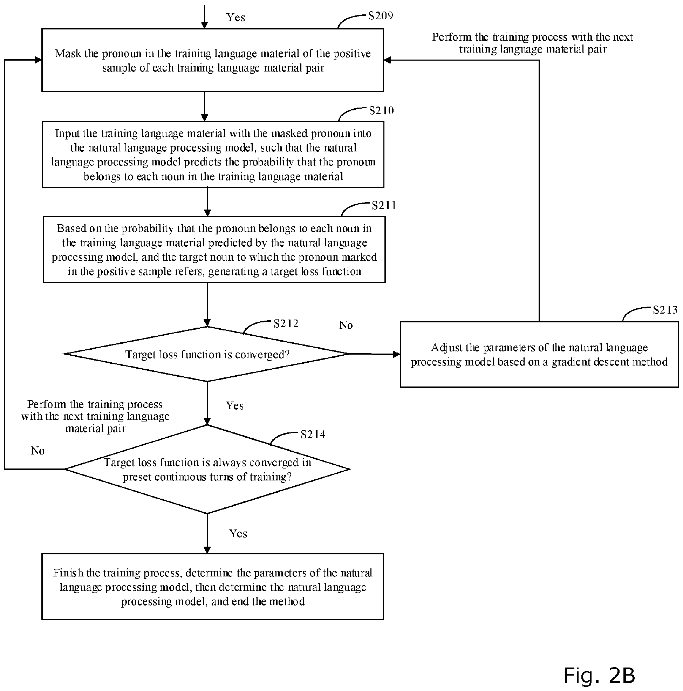

Fig. 2 is a schematic diagram according to a second embodiment of the present application; the technical solution of the method for training a natural language processing model according to the present embodiment of the present application is further described in more detail based on the technical solution of the above-mentioned embodiment shown in Fig. 1. As shown in Fig. 2, the method for training a natural language processing model according to the present embodiment may include the following steps:

S201: For each language material in the preset language material set, replacing a target noun which does not appear for the first time in the corresponding language material with a pronoun as a training language material.

It should be noted that all the language materials collected in the language material set in the present embodiment adopt nouns and avoid pronouns, such that the training language material pairs of the coreference resolution task in the present embodiment may be conveniently constructed based on such language materials. Specifically, according to expression characteristics of the sentence, the pronoun in the sentence appears at the position which does not appear for the first time, so as to refer to another noun which has appeared. Therefore, in the present embodiment, the target noun which does not appear for the first time may be replaced with the pronoun.

S202: Acquiring other nouns from the training language material.

S203: Taking the training language material and the reference relationship of the pronoun to the target noun as the positive sample of the training language material pair.

S204: Taking the training language material and the reference relationships of the pronoun to other nouns as the negative samples of the training language material pair, so as to obtain plural training language material pairs.

Since the target noun is replaced with the pronoun in the above-mentioned steps, the reference relationship of the pronoun to the target noun is correct in the training language material, and is used as the positive sample. The reference relationships of the pronoun to the other nouns in the training language material are incorrect, and are used as the negative samples.

The above-mentioned steps S201-S204 are an implementation of the above-mentioned step S101 in the embodiment shown in Fig. 1. In this way, countless training language material pairs of the coreference resolution task may be accurately constructed effectively, such that the natural language processing model conveniently learns the capability of recognizing the positive sample and the negative sample based on the constructed training expected pairs.

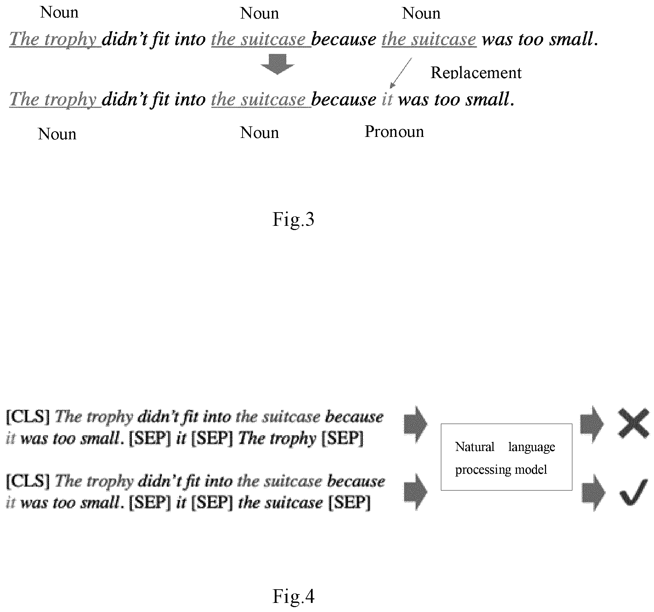

For example, Fig. 3 is a diagram of an example of the constructed training language material pair according to the present embodiment. As shown in Fig. 3, for the language material "The trophy didn't fit into the suitcase because the suitcase was too small", the noun in the sentence may be identified, and the noun "the suitcase" which does not appear for the first time may be replaced with the pronoun "it", so as to obtain one training language material. The positive and negative samples of the training language material pair may be then constructed based on the language material. Based on the above-mentioned process, it may be known that the pronoun "it" refers to the suitcase, and therefore, in the positive sample, the reference relationship of the pronoun "it" to the suitcase may be recorded, and in the negative sample, since the negative sample itself represents an erroneous sample, the reference relationships of the pronoun "it" to other nouns than the suitcase in the training language material may be recorded, for example, in the present embodiment, reference of the pronoun "it" to the trophy may be recorded in the negative sample.

S205: Inputting each training language material pair into the natural language processing model, such that the natural language processing model learns to predict whether the reference relationships in the positive sample and the negative sample are correct or not.

Specifically, this step may be understood as enhancing the capability of the natural language processing model to model the coreference resolution task by means of a multi-task learning process after construction of each training language material pair of the coreference resolution task. For example, the natural language processing model may be modeled as a binary task, and each constructed training language material pair may be fed into the natural language processing model as Sent [pronoun] [Candidate$_{pos}$] and Sent [pronoun] [Candidate$_{neg}$]. Candidate$_{pos}$ represents a correct noun to which the pronoun refers, and Candidate$_{neg}$ represents an incorrect noun to which the pronoun refers. In the training process, the natural language processing model has an optimization goal of judging whether a candidate is the noun to which the pronoun refers, which preliminarily models the coreference resolution task.

For example, when each training language material pair is input into the natural language processing model, the training language material and the reference relationship in the positive sample may be input as one piece of data, each part may be input as one segment, and the pronoun and the noun in the reference relationship may be split into two segments. Similarly, the training language material and the reference relationship in the negative sample are also input as one piece of data. For example, Fig. 4 is a schematic diagram of a pre-training process of the natural language processing model according to the present embodiment. As shown in Fig. 4, in the training process, a start character CLS is added before each piece of data during input, and a character SEP is used to separate the segments. This training process is intended to enable the natural language processing model to recognize the correct reference relationship in the positive sample and the incorrect reference relationship in the negative sample.

S206: Judging whether the prediction is correct or not; if not, executing step S207; if yes, executing step S208.

It should be noted that during prediction of the natural language processing model, the positive and negative samples may be identified incorrectly; that is, the reference relationship in the positive sample is identified to be incorrect, and the reference relationship in the negative sample is identified to be correct. At this point, the natural language processing model is considered to perform a wrong prediction.

S207: Adjusting the parameters of the natural language processing model to adjust the natural language processing model to predict the correct reference relationships in the positive and negative samples; returning to the step S205 to continue the training process with the next training language material pair.

S208: Judging whether the natural language processing model has prediction accuracy in continuous preset turns of training reaching a preset threshold, if not, returning to the step S205 to continue the training process with the next training language material pair; if yes, determining initial parameters of the natural language processing model; and executing step S209.

The preset threshold may be set according to actual requirements, and may be, for example, 80%, 90%, or other percentages. When the accuracy reaches the preset threshold, the natural language processing model may be considered to substantially meet requirements in the pre-training stage, and the training process in the pre-training stage may be stopped at this point.

The above-mentioned steps S205-S208 are an implementation of the above-mentioned step S102 in the embodiment shown in Fig. 1. This process occurs in the pre-training stage, and the parameters of the natural language processing model are preliminarily adjusted to enable the natural language processing model to get the capability of identifying the positive and negative samples.

S209: Masking the pronoun in the training language material of the positive sample of each training language material pair.

The training language material of the positive sample of each training language material pair obtained in the above-mentioned step S203 may be adopted in this step specifically. In the present embodiment, the pronoun may be masked with a special character, for example, an OPT character.

S210: Inputting the training language material with the masked pronoun into the natural language processing model, such that the natural language processing model predicts the probability that the pronoun belongs to each noun in the training language material.

In the present embodiment, after the masked training language material is input into the natural language processing model, the natural language processing model may predict the probability that the pronoun may be each other noun in the training language material based on context information of the masked pronoun in the training language material.

S211: Based on the probability that the pronoun belongs to each noun in the training language material predicted by the natural language processing model, and the target noun to which the pronoun marked in the positive sample refers, generating a target loss function.

For example, in the present embodiment, the generating a target loss function may include the following steps:

(a) Acquiring the probability that the pronoun belongs to the target noun predicted by the natural language processing model based on the target noun to which the pronoun marked in the positive sample refers.

The target noun herein represents a noun to which the pronoun "it" refers correctly.

(b) Constructing a first loss function based on the probability that the pronoun belongs to the target noun predicted by the natural language processing model.

(c) Constructing a second loss function based on the probabilities that the pronoun belongs to other nouns than the target noun predicted by the natural language processing model.

The other nouns are nouns to which the pronoun "it" refers wrongly. Specifically, one or two or more other nouns may exist in one sentence.

(d) Generating the target loss function based on the first loss function and the second loss function.

For example, in "The trophy didn't fit into the suitcase because it was too small" in the above-mentioned embodiment, reference of the pronoun "it" to the suitcase is taken as the positive sample, in the present embodiment, $c_1$ may be recorded as the correct target noun to which the pronoun "it" refers, $c_2$ may be recorded as the incorrect other noun to which the pronoun "it" refers, and the sentence may be recorded as s, such that the probability that the pronoun belongs to the target noun predicted by the natural language processing model may be represented as $p(c_1 \,|s)$, and the probability is a conditional probability; similarly, the probabilities that the pronoun belongs to other nouns than the target noun predicted by the natural language processing model may be represented as $p(c_2 \,|\, s)$. In practical applications, if other nouns $c_3$, $c_4$, or the like, exist in one sentence, there exist $p(c_3 \,|\, s)$, $p(c_4 \,|\, s)$, or the like, correspondingly.

At this point, the first loss function may be represented as $L_{logloss}$ = -log $(p(c_1 \,|\, s))$ correspondingly.

If only the other noun $c_2$ exists, then correspondingly, the second loss function may be represented as:

$$L_{rankloss} = alpha * \max(0, \log(p(c_2 \,|\, s)) - \log(p(c_1 \,|\, s)) + \text{beta})$$

wherein *alpha* and beta are hyper-parameters and may be set according to actual requirements.

In addition, optionally, if other nouns, such as $c_3$, $c_4$, or the like, exist, at this point, the second loss function may be represented as:

$$L_{rankloss} = alpha * \max(0, \log(p(c_2 \,|\, s), \log(p(c_3 \,|\, s), \log(p(c_4 \,|\, s), ...)$$
$$- \log(p(c_1 \,|\, s)) + \text{beta})$$

The target loss function in the present embodiment may directly take the sum of the first loss function Lossloss and the second loss function Rankloss, i.e., $L = L_{logloss} + L_{rankloss}$, as an optimization target of the coreference resolution task, such that the model may notice the difference between different candidate items while the accuracy of candidate item prediction of the model.

Or, in practical applications, the target loss function may also be linear or nonlinear superposition of the two loss functions or combinations thereof in other mathematical ways.

S212: Judging whether the target loss function is converged; if not, executing step S213; if yes, executing step S214.

S213: Adjusting the parameters of the natural language processing model based on a gradient descent method, and returning to the step S209 to continue the training process with the training language material of the positive sample of the next training language material pair.

S214: Judging whether the target loss function is always converged in preset continuous turns of training, if yes, finishing the training process, determining the parameters of the natural language processing model, then determining the natural language processing model, and ending the method; if not, returning to the step S209 to continue the training process with the training language material of the positive sample of the next training language material pair.

In the present embodiment, the number of the preset continuous turns may be 100, 200, or other numbers set according to actual requirements.

The steps S209-S215 in the present embodiment are an implementation of the step S103 in the above-mentioned embodiment shown in Fig. 1. This process occurs in the training stage of the fine-tuning stage, and the natural language processing model continues to be trained based on the parameters of the natural language processing model which are adjusted preliminarily, such that the natural language processing model learns the capability of executing the coreference resolution task.

With the method for training a natural language processing model according to the present embodiment, the semi-supervised training language material pairs of the coreference resolution task may be constructed from the massive unsupervised language materials, thus effectively improving the capability of the model to model the coreference resolution task. Further, in the present embodiment, the coreference resolution task is modeled by the target loss function constructed by the first loss function and the second loss function, such that the model may notice the difference between different other nouns while predicting the correct target noun to which the pronoun refers, and the coreference resolution task may be better modeled by the model, thereby effectively improving the capability of the model to process the coreference resolution task, effectively enriching the functions of the natural language processing model, and enhancing the practicability of the natural language processing model.

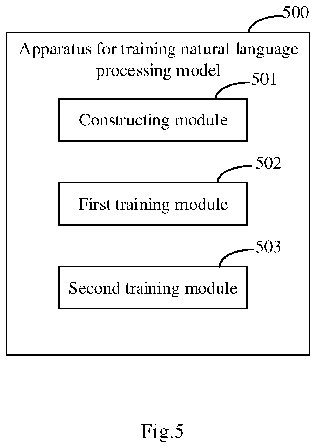

Fig. 5 is a schematic diagram according to a third embodiment of the present application; as shown in Fig. 5, this embodiment provides an apparatus 500 for training a natural language processing model, including:

a constructing module 501 configured to construct training language material pairs of a coreference resolution task based on a preset language material set, wherein each training language material pair includes a positive sample and a negative sample;

a first training module 502 configured to train the natural language processing model with the training language material pairs to enable the natural language processing model to learn the capability of recognizing corresponding positive samples and negative samples; and

a second training module 503 configured to train the natural language processing model with the positive samples of the training language material pairs to enable the natural language processing model to learn the capability of the coreference resolution task.

The apparatus 500 for training a natural language processing model according to the present embodiment has the same implementation as the above-mentioned relevant method embodiment by adopting the above-mentioned modules to implement the implementation principle and the technical effects of training the natural language processing model, and for details, reference may be made to the description of the above-mentioned relevant method embodiment, and details are not repeated herein.

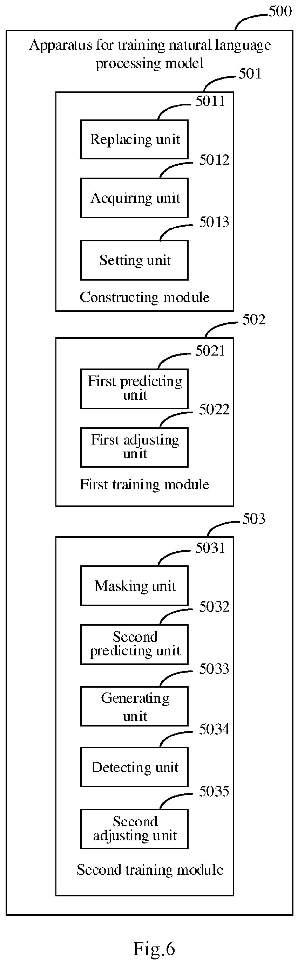

Fig. 6 is a schematic diagram according to a fourth embodiment of the present application; as shown in Fig. 6, the technical solution of the apparatus 500 for training a natural language processing model according to the present embodiment of the present application is further described in more detail based on the technical solution of the above-mentioned embodiment shown in Fig. 5.

As shown in Fig. 6, in the apparatus 500 for training a natural language processing model according to the present embodiment, the constructing module 501 includes:

a replacing unit 5011 configured to, for each language material in the preset language material set, replace a target noun which does not appear for the first time in the corresponding language material with a pronoun as a training language material;
an acquiring unit 5012 configured to acquire other nouns from the training language material; and
a setting unit 5013 configured to take the training language material and the reference relationship of the pronoun to the target noun as the positive sample of the training language material pair;
wherein the setting unit 5013 is further configured to take the training language material and the reference relationships of the pronoun to other nouns as the negative samples of the training language material pair.

Further optionally, as shown in Fig. 6, in the apparatus 500 for training a natural language processing model according to the present embodiment, the first training module 502 includes:

a first predicting unit 5021 configured to input each training language material pair into the natural language processing model, such that the natural language processing model learns to predict whether the reference relationships in the positive sample and the negative sample are correct or not; and
a first adjusting unit 5022 configured to, when the prediction is wrong, adjust the parameters of the natural language processing model to adjust the natural language processing model to predict the correct reference relationships in the positive and negative samples.

Further optionally, as shown in Fig. 6, in the apparatus 500 for training a natural language processing model according to the present embodiment, the second training module 503 includes:

a masking unit 5031 configured to mask the pronoun in the training language material of the positive sample of each training language material pair;
a second predicting unit 5032 configured to input the training language material with the masked pronoun into the natural language processing model, such that the natural language processing model predicts the probability that the pronoun belongs to each noun in the training language material;
a generating unit 5033 configured to, based on the probability that the pronoun belongs to each noun in the training language material predicted by the natural language processing model, and the target noun to which the pronoun marked in the positive sample refers, generate a target loss function;
a detecting unit 5034 configured to judge whether the target loss function is converged; and
a second adjusting unit 5035 configured to adjust the parameters of the natural language processing model based on a gradient descent method if the target loss function is not converged.

Further optionally, the generating unit 5033 is configured to:

acquire the probability that the pronoun belongs to the target noun predicted by the natural language processing model based on the target noun to which the pronoun marked in the positive sample refers;
construct a first loss function based on the probability that the pronoun belongs to the target noun predicted by the natural language processing model;
construct a second loss function based on the probabilities that the pronoun belongs to other nouns than the target noun predicted by the natural language processing model; and
generate the target loss function based on the first loss function and the second loss function.

The apparatus 500 for training a natural language processing model according to the present embodiment has the same implementation as the above-mentioned relevant method embodiment by adopting the above-mentioned modules to implement the implementation principle and the technical effects of training the natural language processing model, and for details, reference may be made to the description of the above-mentioned relevant method embodiment, and details are not repeated herein.

According to the embodiment of the present application, there are also provided an electronic device and a readable storage medium.

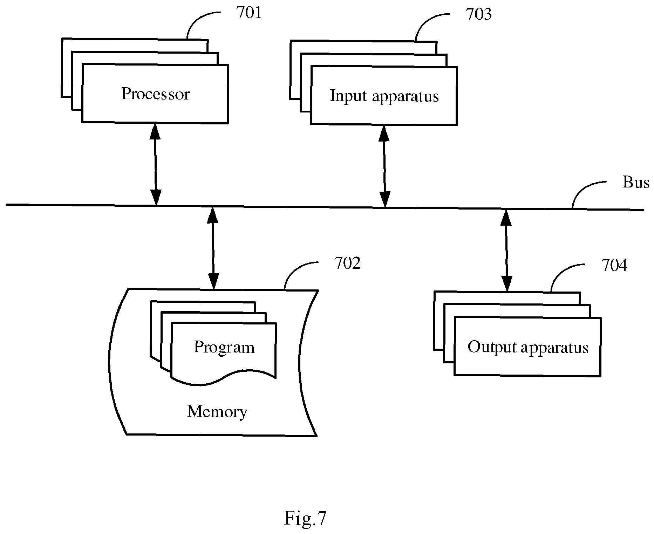

Fig. 7 is a block diagram of an electronic device configured to implement the above-mentioned method according to the embodiment of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 7, the electronic device includes one or more processors 701, a memory 702, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output apparatus, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 7, one processor 701 is taken as an example.

The memory 702 is configured as the non-transitory computer readable storage medium according to the present application. The memory stores instructions executable by the at least one processor to cause the at least one processor to perform a method for training a natural language processing model according to the present application. The non-transitory computer readable storage medium according to the present application stores computer instructions for causing a computer to perform the method for training a natural language processing model according to the present application.

The memory 702 which is a non-transitory computer readable storage medium may be configured to store non-transitory software programs, non-transitory computer executable programs and modules, such as program instructions/modules corresponding to the method for training a natural language processing model according to the embodiments of the present application (for example, the relevant modules shown in Figs. 5 and 6). The processor 701 executes various functional applications and data processing of a server, that is, implements the method for training a natural language processing model according to the above-mentioned embodiments, by running the non-transitory software programs, instructions, and modules stored in the memory 702.

The memory 702 may include a program storage area and a data storage area, wherein the program storage area may store an operating system and an application program required for at least one function; the data storage area may store data created according to use of the electronic device for implementing the method for training a natural language processing model, or the like. Furthermore, the memory 702 may include a high-speed random access memory, or a non-transitory memory, such as at least one magnetic disk storage device, a flash memory device, or other non-transitory solid state storage devices. In some embodiments, optionally, the memory 702 may include memories remote from the processor 701, and such remote memories may be connected via a network to the electronic device for implementing the method for training a natural language processing model. Examples of such a network include, but are not limited to, the Internet, intranets, local area networks, mobile communication networks, and combinations thereof.

The electronic device for the method for training a natural language processing model may further include an input apparatus 703 and an output apparatus 704. The processor 701, the memory 702, the input apparatus 703 and the output apparatus 704 may be connected by a bus or other means, and Fig. 7 takes the connection by a bus as an example.

The input apparatus 703 may receive input numeric or character information and generate key signal input related to user settings and function control of the electronic device for implementing the method for training a natural language processing model, such as a touch screen, a keypad, a mouse, a track pad, a touch pad, a pointing stick, one or more mouse buttons, a trackball, a joystick, or the like. The output apparatus 704 may include a display device, an auxiliary lighting apparatus (for example, an LED) and a tactile feedback apparatus (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN), the Internet and a blockchain network.

A computer system may include a client and a server. Generally, the client and the server are remote from each other and interact through the communication network. The relationship between the client and the server is generated by virtue of computer programs which run on respective computers and have a client-server relationship to each other.

The technical solution according to the embodiment of the present application includes: constructing training language material pairs of the coreference resolution task based on the preset language material set, wherein each training language material pair includes the positive sample and the negative sample; training the natural language processing model with training language material pairs to enable the natural language processing model to learn the capability of recognizing corresponding positive samples and negative samples; and training the natural language processing model with the positive samples of the training language material pairs to enable the natural language processing model to learn the capability of the coreference resolution task, so as to model the coreference resolution task by the natural language processing model, improve the capacity of the natural language processing model to process the coreference resolution task, enrich functions of the natural language processing model, and enhance practicability of the natural language processing model.

With the technical solution according to the embodiment of the present application, the semi-supervised training language material pairs of the coreference resolution task may be constructed from the massive unsupervised language materials, thus effectively improving the capability of the model to model the coreference resolution task. Further, in the present embodiment, the coreference resolution task is modeled by the target loss function constructed by the first loss function and the second loss function, such that the model may notice the difference between different other nouns while predicting the correct target noun to which the pronoun refers, and the coreference resolution task may be better modeled by the model, thereby effectively improving the capability of the model to process the coreference resolution task, effectively enriching the functions of the natural language processing model, and enhancing the practicability of the natural language processing model.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

**Claims**

1.  A method for training a natural language processing model, comprising:

    constructing (S101) training language material pairs of a coreference resolution task based on a preset language material set, wherein each training language material pair comprises a positive sample and a negative sample;
    training (S102) the natural language processing model with the training language material pairs to enable the natural language processing model to learn the capability of recognizing corresponding positive samples and negative samples; and
    training (S103) the natural language processing model with the positive samples of the training language material pairs to enable the natural language processing model to learn the capability of the coreference resolution task.

2. The method according to claim 1, wherein the constructing training language material pairs of a coreference resolution task based on a preset language material set comprises:

for each language material in the preset language material set, replacing a target noun which does not appear for the first time in the corresponding language material with a pronoun as a training language material;
acquiring other nouns from the training language material;
taking the training language material and the reference relationship of the pronoun to the target noun as the positive sample of the training language material pair; and
taking the training language material and the reference relationships of the pronoun to other nouns as the negative samples of the training language material pair.

3. The method according to claim 1 or 2, wherein the training the natural language processing model with training language material pairs to enable the natural language processing model to learn the capability of recognizing corresponding positive samples and negative samples comprises:

inputting each training language material pair into the natural language processing model, such that the natural language processing model learns to predict whether the reference relationships in the positive sample and the negative sample are correct or not; and
when the prediction is wrong, adjusting the parameters of the natural language processing model to adjust the natural language processing model to predict the correct reference relationships in the positive samples and the negative samples.

4. The method according to claim 1 or 2, wherein the training the natural language processing model with the positive samples of training language material pairs to enable the natural language processing model to learn the capability of the coreference resolution task comprises:

masking the pronoun in the training language material of the positive sample of each training language material pair;
inputting the training language material with the masked pronoun into the natural language processing model, such that the natural language processing model predicts the probability that the pronoun belongs to each noun in the training language material;
based on the probability that the pronoun belongs to each noun in the training language material predicted by the natural language processing model, and the target noun to which the pronoun marked in the positive sample refers, generating a target loss function;
judging whether the target loss function is converged; and
adjusting the parameters of the natural language processing model based on a gradient descent method if the target loss function is not converged.

5. The method according to claim 4, wherein the based on the probability that the pronoun belongs to each noun in the training language material predicted by the natural language processing model, and the target noun to which the pronoun marked in the positive sample refers, generating a target loss function comprises:

acquiring the probability that the pronoun belongs to the target noun predicted by the natural language processing model based on the target noun to which the pronoun marked in the positive sample refers;
constructing a first loss function based on the probability that the pronoun belongs to the target noun predicted by the natural language processing model;
constructing a second loss function based on the probabilities that the pronoun belongs to other nouns than the target noun predicted by the natural language processing model; and
generating the target loss function based on the first loss function and the second loss function.

6. An apparatus (500) for training a natural language processing model, comprising:

a constructing module (501) configured to construct training language material pairs of a coreference resolution task based on a preset language material set, wherein each training language material pair comprises a positive sample and a negative sample;
a first training module (502) configured to train the natural language processing model with the training language material pairs to enable the natural language processing model to learn the capability of recognizing corresponding positive samples and negative samples; and

a second training module (503) configured to train the natural language processing model with the positive samples of the training language material pairs to enable the natural language processing model to learn the capability of the coreference resolution task.

7. The apparatus (500) according to claim 6, wherein the constructing module (501) comprises:

a replacing unit (5011) configured to, for each language material in the preset language material set, replace a target noun which does not appear for the first time in the corresponding language material with a pronoun as a training language material;
an acquiring unit (5012) configured to acquire other nouns from the training language material; and
a setting unit (5013) configured to take the training language material and the reference relationship of the pronoun to the target noun as the positive sample of the training language material pair;
wherein the setting unit (5013) is further configured to take the training language material and the reference relationships of the pronoun to other nouns as the negative samples of the training language material pair.

8. The apparatus (500) according to claim 6 or 7, wherein the first training module (502) comprises:

a first predicting unit (5021) configured to input each training language material pair into the natural language processing model, such that the natural language processing model learns to predict whether the reference relationships in the positive sample and the negative sample are correct or not; and
a first adjusting unit (5022) configured to, when the prediction is wrong, adjust the parameters of the natural language processing model to adjust the natural language processing model to predict the correct reference relationships in the positive samples and the negative samples.

9. The apparatus (500) according to claim 6 or 7, wherein the second training module (503) comprises:

a masking unit (5031) configured to mask the pronoun in the training language material of the positive sample of each training language material pair;
a second predicting unit (5032) configured to input the training language material with the masked pronoun into the natural language processing model, such that the natural language processing model predicts the probability that the pronoun belongs to each noun in the training language material;
a generating unit (5033) configured to, based on the probability that the pronoun belongs to each noun in the training language material predicted by the natural language processing model, and the target noun to which the pronoun marked in the positive sample refers, generate a target loss function;
a detecting unit (5034) configured to judge whether the target loss function is converged; and
a second adjusting unit (5035) configured to adjust the parameters of the natural language processing model based on a gradient descent method if the target loss function is not converged.

10. The apparatus (500) according to claim 9, wherein the generating unit (5033) is configured to:

acquire the probability that the pronoun belongs to the target noun predicted by the natural language processing model based on the target noun to which the pronoun marked in the positive sample refers;
construct a first loss function based on the probability that the pronoun belongs to the target noun predicted by the natural language processing model;
construct a second loss function based on the probabilities that the pronoun belongs to other nouns than the target noun predicted by the natural language processing model; and
generate the target loss function based on the first loss function and the second loss function.

11. An electronic device, comprising:

at least one processor;
a memory connected with the at least one processor communicatively;
wherein the memory stores instructions executable by the at least one processor to cause the at least one processor to perform the method according to any one of claims 1 to 5.

12. A non-transitory computer readable storage medium with computer instructions stored thereon, wherein the computer instructions are used for causing a computer to perform the method according to any one of claims 1 to 5.

13. A computer program product comprising instructions which, when the program is executed by a computer, cause the computer to perform the method according to any one of claims 1 to 5.

S101

Construct training language material pairs of a coreference resolution task based on a preset language material set, wherein each training language material pair includes a positive sample and a negative sample

S102

Train natural language processing model with training language material pairs to enable natural language processing model to learn capability of recognizing corresponding positive samples and negative samples

S103

Train natural language processing model with positive samples of training language material pairs to enable natural language processing model to learn capability of coreference resolution task

Fig.1

S201

For each language material in the preset language material set, replace a target noun which does not appear for the first time in the corresponding language material with a pronoun as a training language material

↓

S202

Acquire other nouns from the training language material

↓

S203

Take the training language material and the reference relationship of the pronoun to the target noun as the positive sample of the training language material pair

↓

S204

Take the training language material and the reference relationships of the pronoun to other nouns as the negative samples of the training language material pair, so as to obtain plural training language material pair

↓

S205

Input each training language material pair into the natural language processing model, such that the natural language processing model learns to predict whether the reference relationships in the positive sample and the negative sample are correct or not

Perform the training process with the next training language material pair

↓

S206          No

Prediction is correct?

S207

Adjust the parameters of the natural language processing model to adjust the natural language processing model to predict the correct reference relationships in the positive and negative samples

Perform the training process with the next training language material pair

Yes

No

S208

Natural language processing model has prediction accuracy in continuous preset turns of training reaching a preset threshold?

↓ Yes

S209

Fig. 2A

Yes ⌐S209

Mask the pronoun in the training language material of the positive
sample of each training language material pair

Perform the training process with the next
training language material pair

⌐S210

Input the training language material with the masked pronoun into
the natural language processing model, such that the natural
language processing model predicts the probability that the pronoun
belongs to each noun in the training language material

⌐S211

Based on the probability that the pronoun belongs to each noun in
the training language material predicted by the natural language
processing model, and the target noun to which the pronoun marked
in the positive sample refers, generating a target loss function

⌐S212   No

Target loss function is converged?

⌐S213

Adjust the parameters of the natural language
processing model based on a gradient descent method

Perform the training process
with the next training language
material pair

Yes

⌐S214

No

Target loss function is always converged in
preset continuous turns of training?

Yes

Finish the training process, determine the parameters of the natural
language processing model, then determine the natural language
processing model, and end the method

Fig. 2B

Noun　　　　　　　　　　　Noun　　　　　　　　　　Noun

*The trophy* didn't fit into *the suitcase* because *the suitcase* **was too small.**

⬇　　　　　　　　／　Replacement

*The trophy* didn't fit into *the suitcase* because *it* **was too small.**

Noun　　　　　　　　　　　Noun　　　　　　Pronoun

Fig.3

[CLS] *The trophy didn't fit into the suitcase because it was too small.* [SEP] *it* [SEP] *The trophy* [SEP]

➡

| Natural language processing model |

➡ ✘

[CLS] *The trophy didn't fit into the suitcase because it was too small.* [SEP] *it* [SEP] *the suitcase* [SEP]

➡

➡ ✔

Fig.4

500

Apparatus for training natural language processing model

501

Constructing module

502

First training module

503

Second training module

Fig.5

500

**Apparatus for training natural language processing model**

501

**5011**

Replacing unit

**5012**

Acquiring unit

**5013**

Setting unit

Constructing module

502

**5021**

First predicting unit

**5022**

First adjusting unit

First training module

503

**5031**

Masking unit

**5032**

Second predicting unit

**5033**

Generating unit

**5034**

Detecting unit

**5035**

Second adjusting unit

Second training module

Fig.6

Fig.7

Europäisches
Patentamt

European
Patent Office

Office européen
des brevets

# EUROPEAN SEARCH REPORT

Application Number

EP 21 16 4450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/032444 A1 (HAMADA SHINICHIRO [JP]) 29 January 2015 (2015-01-29) * the whole document * | 1-13 | INV. G06F40/30 G06N3/08 |
| X | WO 2018/174816 A1 (AGENCY SCIENCE TECH & RES [SG]) 27 September 2018 (2018-09-27) * the whole document * | 1-13 | |
| X | DEMING YE ET AL: "Coreferential Reasoning Learning for Language Representation", ARXIV.ORG, CORNELL UNIVERSITY LIBRARY, 201 OLIN LIBRARY CORNELL UNIVERSITY ITHACA, NY 14853, 15 April 2020 (2020-04-15), XP081644633, * the whole document * | 1-13 | |
| A | YU SUN ET AL: "ERNIE: Enhanced Representation through Knowledge Integration", COMPUTER SCIENCE, CORNELL UNIVERSITY LIBRARY, 201 OLIN LIBRARY CORNELL UNIVERSITY ITHACA, NY 14853, 19 April 2019 (2019-04-19), pages 1-8, XP081171557, * the whole document * | 1-13 | TECHNICAL FIELDS SEARCHED (IPC) G06F G06N |
| A | MANDAR JOSHI ET AL: "SpanBERT: Improving Pre-training by Representing and Predicting Spans", ARXIV.ORG, CORNELL UNIVERSITY LIBRARY, 201 OLIN LIBRARY CORNELL UNIVERSITY ITHACA, NY 14853, 24 July 2019 (2019-07-24), XP081581366, * the whole document * | 1-13 | |

The present search report has been drawn up for all claims

| Place of search | Date of completion of the search | Examiner |
|---|---|---|
| Berlin | 7 September 2021 | Lechenne, Laurence |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 16 4450

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2021

| Patent document cited in search report | Publication date | Patent family member(s) | Publication date |
|---|---|---|---|
| US 2015032444 A1 | 29-01-2015 | CN 104169909 A<br>JP 5389273 B1<br>JP WO2014002172 A1<br>US 2015032444 A1<br>WO 2014002172 A1 | 26-11-2014<br>15-01-2014<br>26-05-2016<br>29-01-2015<br>03-01-2014 |
| WO 2018174816 A1 | 27-09-2018 | NONE | |

For more details about this annex : see Official Journal of the European Patent Office, No. 12/82